# EUROPÄISCHE PATENTSCHRIFT

(11) **EP 0 993 711 B1**
(45) Veröffentlichungstag und Bekanntmachung des Hinweises auf die Patenterteilung: **02.05.2003**
(21) Anmeldenummer: 98928048.2
(22) Anmeldetag: 01.07.1998
(51) Int. Cl.: H04J 3/06, H04J 3/07, H04J 3/16

(54) **VERFAHREN UND SCHALTUNGSANORDNUNG ZUR ADAPTION UND DURCHSCHALTUNG EINES DATENSTROMES**
METHOD AND CIRCUIT FOR ADAPTING AND SWITCHING THROUGH A DATA FLOW
PROCEDE ET CIRCUIT POUR L'ADAPTATION ET LA COMMUTATION D'UN FLUX DE DONNEES

(30) Priorität: 04.07.1997 CH 163297
(43) Veröffentlichungstag der Anmeldung: 19.04.2000
(73) Patentinhaber: Siemens Schweiz AG, 8047 Zürich (CH)
(72) Erfinder: THALMANN, Markus, CH-8006 Zürich (CH); STADLER, Manfred, CH-8057 Zürich (CH)
(74) Vertreter: Berg, Peter, Dipl.-Ing.
(86) Internationale Anmeldenummer: CH9800285
(87) Internationale Veröffentlichungsnummer: WO99001955

(56) Entgegenhaltungen:
- EP-A- 0 598 455
- DE-A- 4 018 687
- KLEIN M J ET AL: "SONET/SDH POINTER PROCESSOR IMPLEMENTATIONS" PROCEEDINGS OF THE GLOBAL TELECOMMUNICATIONS CONFERENCE (GLOBECOM), SAN FRANCISCO, NOV. 28 - DEC. 2, 1994, Bd. 1 OF 3, 28. November 1994, Seiten 655-660, XP000488625 INSTITUTE OF ELECTRICAL AND ELECTRONICS ENGINEERS
- BEER J ET AL: "PDH-UND SDH-ÜBERTRAGUNGSTECHNIK IM PROJEKT ISDN-BAHN" SIGNAL + DRAHT, Bd. 85, Nr. 12, 1. Dezember 1993, Seiten 432-435, XP000487577
- LEDONNE R ET AL: "INTRODUCTION OF THE SDH SYSTEMS INTO THE ITALIAN NETWORK" COUNTDOWN TO THE NEW MILENNIUM, PHOENIX, DEC. 2 - 5, 1991, Bd. 2 OF 3, 2. Dezember 1991, Seiten 746-749, XP000332774 INSTITUTE OF ELECTRICAL AND ELECTRONICS ENGINEERS
- "SYNFONET BRINGS TOGETHER THE BEST OF SDH AND PDH WORLDS" DISCOVERY, Bd. 41, 1. Januar 1996, Seite 17/18, XP000587295

## Beschreibung

Die vorliegende Erfindung betrifft eine Schaltungsanordnung nach dem Oberbegriff des Patentanspruchs 1 bzw. 7.

Übertragungsnetze der Synchronen Digitalen Hierarchie (SDH (In USA SONET)) (siehe z.B. [5] zeichnen sich dadurch aus, dass alle beteiligten Netzelemente im Normalfall mit einer einzigen, zentral erzeugten Taktfrequenz arbeiten, die von einem Netzelement aus dem Datenstrom eines wählbaren Einganges extrahiert wird. Dadurch lässt sich Ober ein beliebig strukturiertes Datennetz ein baumartiges Frequenzverteilnetz aufbauen. Anhand einer dem Signal mitgegebenen information, die die Güte der Frequenz des betreffenden Datenstromes bezeichnet, kann beim Auftreten von Störungen automatisch auf die beste Ausweichfrequenzquelle umgeschaltet werden. An den Übergängen von SDH-Übertragungsnetzen zu Netzen der Plesiochronen Digitalen Hierarchie (PDH) sind Multiplexer (z.B.: Terminalmultiplexer, Add-/Drop-Multiplexer) vorgesehen, die unter Umständen nur über eine einzige Datenverbindung mit dem Systemtakt versorgt werden. Fällt diese Datenverbindung, so arbeitet der betreffende Multiplexer mit einer intern erzeugten Taktfrequenz weiter. In diesem Fall stimmt die Frequenz des vom Multiplexer an das SDH-Übertragungsnetz abgegebenen Signals nicht mit den weiteren in diesem Bereich vorhandenen Taktfrequenzen überein. Die Differenz zwischen den Taktfrequenzen muss daher durch speziell dafür vorgesehene Massnahmen, die in [1]-[5] beschrieben sind, ausgeglichen werden.

Die Plesiochrone Digitale Hierarchie (PDH) erlaubt es nicht, einen einzelnen Kanal direkt aus einem Datenstrom zu entnehmen; es müssen immer alle Hierarchiestufen des Multiplexsystems durchlaufen werden, in denen die Kanäle zu Systemen mit einer immer höheren Kanalzahl zusammengefasst werden. Auf der Empfängerseite werden dieselben Hierarchiestufen in umgekehrter Reihenfolge durchlaufen, um die einzelnen Kanäle dann weiter verteilen zu können. Die Synchrone Digitale Hierarchie (SDH) ermöglicht demgegenüber den direkten Zugriff auf Signale bestimmter Bandbreite innerhalb eines hochkanaligen Systems, um diese an einen Teilnehmer oder an eine Vermittlungsstelle zu leiten. Es ist auch möglich, auf den breitbandigen Signalstrom zuzugreifen, um bestimmte Signale durch andere auszutauschen, ohne die gesamte Multiplexhierarchie durchlaufen zu müssen. Dieser Zugriff erfolgt über ein rechnergesteuertes Koppelnetz (siehe [6], Seiten 48 - 55 oder [5], Seite 283).

Die Struktur der in der Synchronen Digitalen Hierarchie (SDH) übertragenen Datenströme ist in [2] und [5] ausführlich beschrieben. Die Synchrone Digitalen Hierarchie (SDH) basiert auf der synchronen Übertragung von Transportmodulen (STM-n), in denen Nutzinformationen eingefügt sind. Ein Basistransportmodul STM-1, das aus einem Rahmen mit 9 Zeilen und 270 Spalten bzw. 2430 Felder mit 8 Bit Datenkapazität besteht, weist einen maximalen Dateninhalt von 19440 Bits auf. Die STM-1-Module werden mit einer Taktfrquenz von 8000 Hz übertragen, wodurch ein Übertragungskanal mit einer Kapazität von 155,52 Mbit/s geschaffen wird.

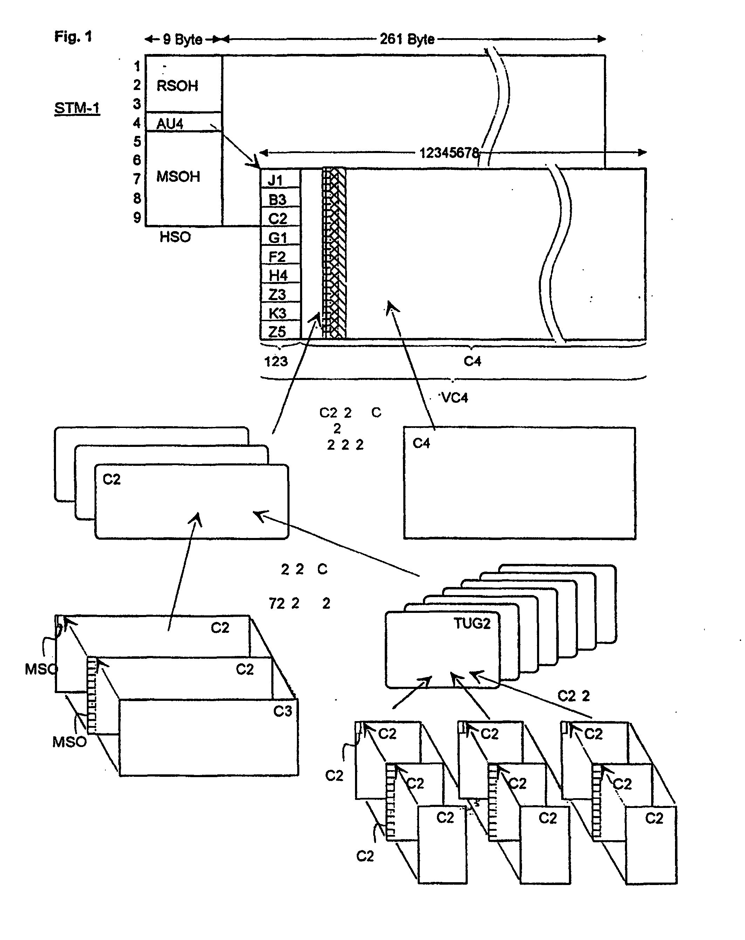

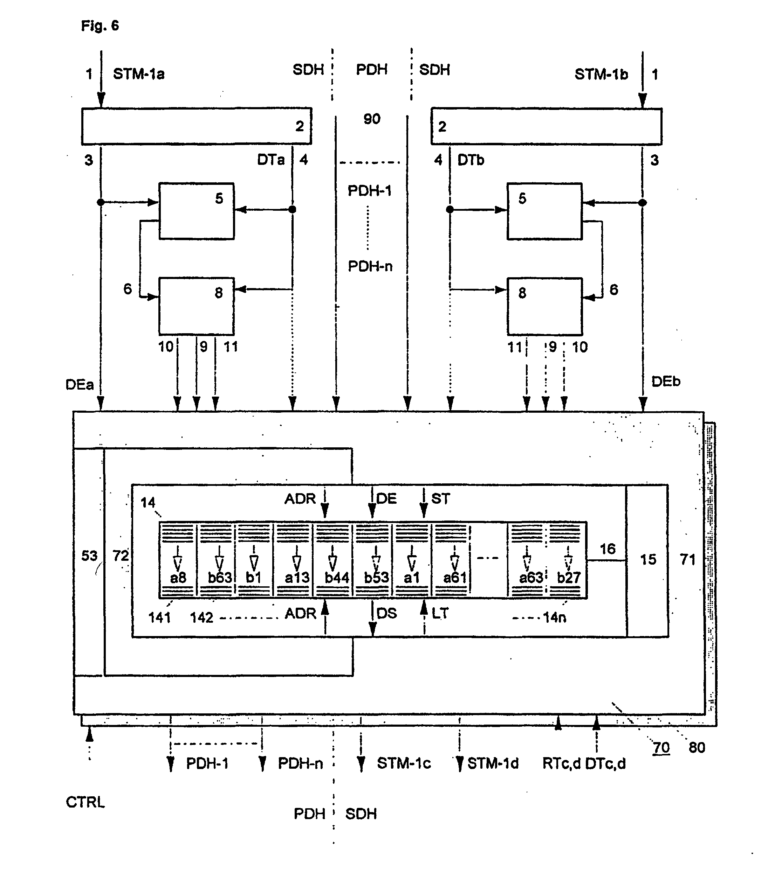

Wie in Fig. 1 gezeigt, bilden die Reihen 1 - 3 (Regeneration Section Overhead) und 5 - 9 (Multiplex Section Overhead) der ersten 9 Spalten eines synchronen Transportmoduls STM-1 den Abschnittskopf (Section Overhead SOH). Die Reihe 4 der ersten 9 Spalten enthält einen Verwaltungseinheitszeiger (Pointer) AU-4 PTR, der das Feld bezeichnet, in dem ein von der Verwaltungseinheit AU-4 aufgenommenes Signal bzw. das erste Feld (J1) eines virtuellen Containers (z.B. VC-4) beginnt. Die restlichen 261 Spalten eines synchronen Transportmoduls STM-1, die zur Aufnahme des virtuellen Containers VC-4 vorgesehen sind, bilden das Nutzfeld (Payload), das in Abhängigkeit der Struktur und der Übertragungsrate der zu übertragenden Daten verschieden strukturiert ist. In einem virtuellen Container VC-4, der einen Pfadrahmenkopf (Path Overhead POH) aufweist, können z.B. drei 34-Mbit/s Kanäle oder 63 2-Mbit/s Kanäle oder auch eine kontinuierliche Folge von ATM-Zellen enthalten sein. Die festgelegte Multiplexstruktur ist in Fig. 6-1 und Fig. 6-2 von [2] gezeigt. Ein virtueller Container VC-4 kann nebst dem Rahmenkopf POH einen C-4-Container, drei Transportrahmen TU3 mit virtuellen Containern VC-3 oder 63 Transportrahmen TU12 mit virtuellen Containern VC-12 enthalten, die je einen Container C-3 bzw. C-12 sowie einen Rahmenkopf POH aufweisen. Die virtuellen Container VC-3 und VC-12 sind verschiebbar in den Transportrahmen, sogenannten Tributary Units TU-3 bzw. TU-12 enthalten, die zeitmultiplexed im ersten Byte einen nachgeführten Verwaltungseinheitszeiger (Pointer) aufweisen, der auf das erste Feld der virtuellen Container VC-3 und VC-12 zeigt. Die Transportrahmen TU-3 bzw. TU-12 sind in Transportgruppen TUG-3 bzw. TUG-2 und TUG-3 zusammengefasst. Eine Transportgruppe TUG-3 enthält einen Transportrahmen TU-3 oder sieben Transportgruppen TUG-2, von denen jede drei Transportrahmen TU-12 enthält. Durch die Kopffelder POH sind die Nutzinformationen bis zur Container-Ebene hinunter identifizierbar. Einzelne Nutzkanäle können daher einem Transportmodul STM-1 entnommen oder hinzugefügt werden, ohne das ganze synchrone Modul STM-1 zu zeriegen. Der Beginn einer Übertragung im Nutzfeld wird über die in den entsprechenden Rahmenstrukturen (AU-4, TU-3, TU-12) enthaltenen Zeiger PTR angegeben. Einzelne Container sind so identifizierbar und können durch die Elemente der Synchronen Digitalen Hierarchie (SDH) verschieden zusammengestellt und durch das Netz geleitet werden. Gemäss Ziff. 2.7 und Ziff. 2.11 von [1] sind für virtuelle Container VC-n mit höherer Ordnungszahl (n = 3 oder 4) und für virtuelle Container VC-m mit niedrigerer Ordnungszahl (m=11, 12 oder 2) Durchschaltestufen bzw. Koppelfelder (Higher order path connection function (HPC-n) bzw. Lower order path connection function (LPC-n)) vorgesehen.

Damit die Durchschaltung der Kanäle in den Durchschaltestufen bzw. Koppelnetzen erfolgen kann, sollen z.B. gemäss [4], Seite 5 oder [5]. Seite 282 alle Signale derselben Hierarchiestufe synchron aufeinander bzw. auf die Flanken eines Taktsignals abgestimmt sein. Zusätzlich müssen die Rahmen der durchgeschalteten Signale phasengleich verlaufen. Gemäss Ziff. 2.4 von [1] ist in einer Adaptionsstufe, die der Durchschaltestufe vorgeschaltet ist (vor der Higher order path connection function (HPC-n) liegt die Multiplex section adaptation (MSA) und vor der Lower order path connection function (LPC-n) liegt die Higher order path adaptation (HPA-n), die Synchronisation mit einem Taktsignal vorzunehmen.

Wander und plesiochroner Offset im empfangenen Signal werden in einer vorgeschalteten Adaptionsstufe durch die Zeigerverarbeitungsfunktion (Pointer processing function) korrigiert. Gemäss Ziff. 2.5.3 von [1] wird die Zeigerverarbeitungsfunktion mit Hilfe eines Datenpuffers realisiert, in den die Daten mit dem Takt der zugeführten Signale eingeschrieben und aus dem die Daten mit dem Systemtakt (T0) wieder ausgelesen werden. In Abhängigkeit von Abweichungen zwischen dem Schreib- und dem Lesetakt ändert sich der Füllstand des Datenpuffers. Wenn der Füllstand für einen virtuellen Container VC-n einen vorgesehenen Schwellwert unterschreitet, wird der Rahmenoffset um drei Felder (für einen VC-4) inkrementiert, wonach drei Lesezyklen ausgelassen werden. Wenn der Füllstand für einen virtuellen Container VC-n einen vorgesehenen Schwellwert überschreitet, wird der Rahmenoffset um drei Felder (für einen VC-4) dekrementiert, wonach die korrespondierende Anzahl Bytes aus dem Datenpuffer ausgelesen wird. Dazu werden dem Lesetakt zusätzliche Taktimpulse aufgeprägt. Im Zusammenhang mit einem derartigen Synchronisiervorgang wird jeweils noch eine entsprechende Korrektur des Zeigerstandes ausgeführt. Der beschriebene Synchronisiervorgang ist in [2] unter dem Thema "Frequency justification" eingehend erläutert (siehe auch Spalte 5 von [3] und insbesondere Kapitel 4 von [5]).

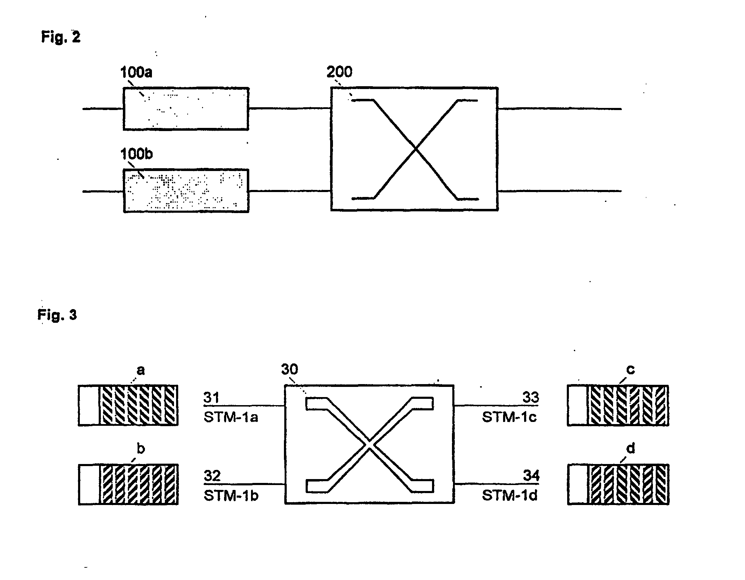

Obwohl die Durchschaitung eines synchronen Datenstromes in einer Durchschaltestufe bzw. einem Koppelfeld mit geringem Aufwand, d.h. ohne das Zerlegen des gesamten STM-1 Moduls, erfolgen kann, ist aus dem Blockschaltbild eines Terminalmultiplexers. wie es in Fig. 2-1 von [1] dargestellt ist, ersichtlich, dass die Adaption (Multiplex Section Adaptation, Higher Order Path Adaptation, Lower Order Path Adaptation) und die Durchschattung (Higher Order Path Connection, Lower Order Path. Connection) mit grossem Aufwand erfolgt.

Der vorliegenden Erfindung liegt daher die Aufgabe zugrunde, ein Verfahren zur Adaption und Durchschaltung von Datenkanälen und eine Schaltungsanordnung hierzu anzugeben, die mit geringem Aufwand realisierbar ist.

Diese Aufgabe wird durch die im kennzeichnenden Teil des Patentanspruchs 1 bzw. 7 angegebenen Massnahmen gelöst. Vorteilhafte Ausgestaltungen der Erfindung sind in weiteren Ansprüchen angegeben.

Durch das erfindungsgemässe Verfahren erfolgt die Adaption und Durchschaltung der in den synchronen Modulen STM enthaltenen Datenkanäle in einem Arbeitsvorgang. Die Adaptlonsstufe und die Durchschaltestufe bzw. das Koppelfeld werden zusammengefasst und mit einem einzigen Speichermodul, das mehrere elastische Datenpuffer aufweist, realisiert. Dadurch ergibt sich ein geringerer Hardwareaufwand, was sich in bezug auf Kosten und Platzbedarf günstig bemerkbar macht. Ferner reduziert sich die benötigte Verarbeitungszeit um einige Taktzyklen.

Die Erfindung wird nachfolgend anhand einer Zeichnung beispielsweise näher erläutert. Dabei zeigt:
- Fig. 1: Möglichkeiten zum Aufbau eines STM-1 Rahmens,
- Fig. 2: Adaptionsstufen 100a, 100b mit nachgeschaltetem Koppelfeld 200,
- Fig. 3: ein Modul 30 zur gleichzeitigen Adaption und Durchschaltung von STM-1 Modulen,
- Fig. 4: eine Schaltungsanordnung zur gleichzeitigen Adaption und Durchschaltung von STM-1 Modulen mit einem adressierbaren, elastischen Datenpuffer und
- Fig. 5: die dem elastischen Datenpuffer nachgeschalteten Module, die zur Weiterverarbeitung der synchronisierten und gekoppelten Daten vorgesehen sind.
- Fig. 6: die aus Fig. 4 und Fig. 5 bekannte Schaltungsanordnung in einer vereinfachten Ausgestaltung.

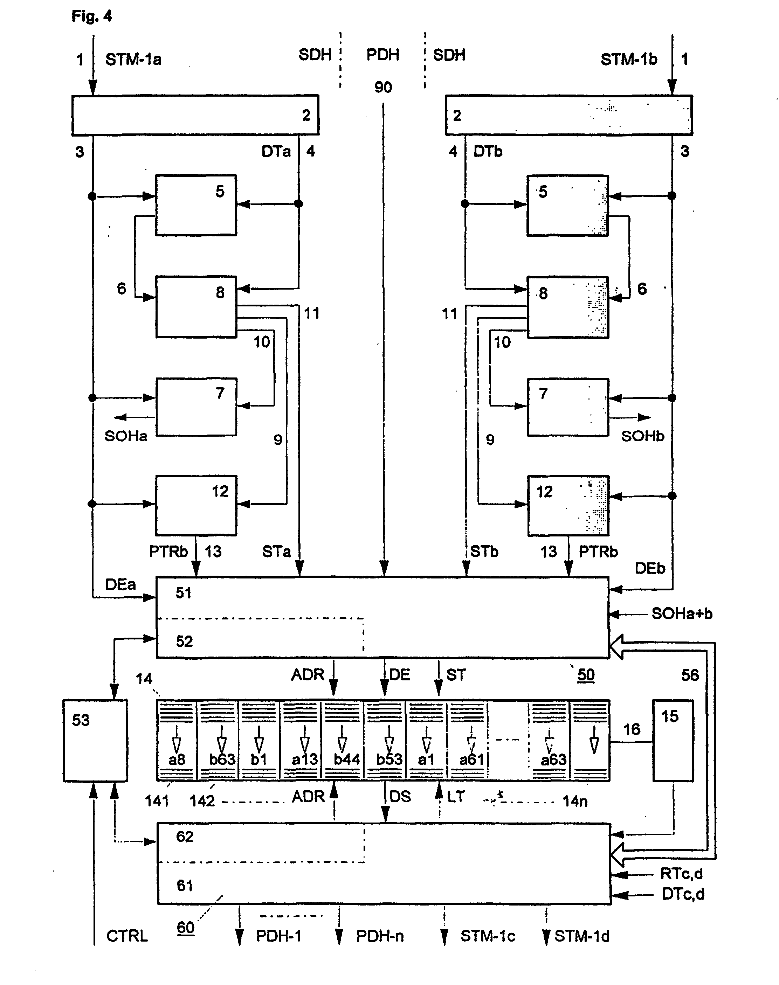

Fig. 1 zeigt den Aufbau eines synchronen Transportmoduls STM-1. Fig. 2 zeigt eine z.B. aus [1] und [4] bekannte Anordnung zur Adaption und Durchschaltung von zwei SDH-Datenströmen. Die Adaption der SDH-Datenströme erfolgt in den Modulen 100a und 100b, die in [3] und [4] beschrieben sind. Die Durchschaltung der Datenkanäle erfolgt im Modul 200, das ein Koppelfeld enthält, wie es in Fig. 7.35 von [5] gezeigt ist. Fig. 3 zeigt ein erfindungsgemässes Modul 30 zur gleichzeitigen Adaption und Durchschaltung von STM-1 Modulen. Fig. 4 zeigt eine mögliche Ausgestaltung einer Schaltungsanordnung für das in Fig. 3 gezeigte Modul 30. Die Verarbeitung eines SDH-Datenstromes durch entsprechende Funktionsblöcke ist aus [1] und [2] bekannt. In [3] ist eine mögliche Schaltungsanordnung zur Adaption eines Datenstromes beschrieben. Die darin gewählten Bezugszeichen sind in Fig. 4 weitgehend übernommen. Darin ist eine Schaltungsanordnung gezeigt, durch die synchrone Transportmodule STM-1a, STM-1b zerlegt und die darin enthaltenen Kanäle bzw. die entsprechenden virtuellen Container VC-n oder die Container C-n und eine Taktfrequenz aufeinander abgestimmt und an die vorgesehenen Ausgänge in bezug auf Raum- und/oder Zeitlage durchgeschaltet werden. Sofern die virtuellen Container VC-n aus synchronen Transportmodulen STM-1a, STM-b in synchrone Module STM-1c, STM-d umgefüllt werden erfolgt eine Adaption an eine neue Frequenz durch Verschieben des virtuellen Containers VC-n im zugehörigen Transportrahmen TU-n und Nachführung des betreffenden Verwaltungseinheitszeigers (Pointer). Sofern die Container C-n an das Netzwerk der PDH abzugeben sind, erfolgt eine Anpassung der dafür vorgesehenen Taktfrequenz.

In Fig. 4 sind zwei Verarbeitungskanäle für synchrone Transportmodule STM-1a und STM-1b gezeigt, die z.B. in synchrone Module STM-1c und STM-1d umgefüllt oder deren Datenkanäle an ein Netzwerk der Plesiochronen Digitalen Hierarchie PDH abgegeben werden sollen. Die erfindungsgemässe Schaltungsanordnung kann jedoch auch nur einen Verarbeitungskanal für synchrone Module STM-1a aufweisen, deren Container C-n an das Netzwerk der Plesiochronen Digitalen Hierarchie PDH abgegeben werden sollen. Die Erfindung kann ferner zur Überführung von Daten in dieselbe, in eine höhere oder eine tiefere Hierarchieebene verwendet werden.

In Fig. 4 ist eine Empfangsschnittstelle 2, eine Rahmensynchronisiereinrichtung 5, ein Rahmenzähler 8 (z.B. auch Zeilen-, Spalten- oder Bytezähler), eine Abschnittskopf-Empfangseinrichtung 7, eine Verwaltungseinheitszeiger-Empfangseinrichtung 12, ein erstes Steuermodul 50, ein Speichermodul 14, ein Füllstandsmesser 15, ein Haltespeicher 53 sowie ein zweites Steuermodul 80 gezeigt. In den Eingang 1 der Empfangsschnittstelle 2 wird ein "kommendes" STM-1 Modul eingespeist. Dieses wird in der Empfangsschnittstelle 2 derart aufbereitet, dass am Datenausgang 3 dessen Daten DEa in binärem Format (vorzugsweise 8-Bit-parallel) und am Datentaktausgang 4 der zugehörige Datentakt DTa abgegeben werden. Die Rahmensynchronisiereinrichtung 5 prüft die Daten DE auf das Auftreten eines Rahmenkennungswortes bzw. eines definierten Bitmusters, das im Datenstrom periodisch mit jedem synchronen Modul STM-1a übertragen wird. Mit jedem Auftreten eines Rahmenkennungswortes setzt die Rahmensynchronisiereinrichtung 5 den Rahmenzähler 8 über dessen Setzeingang 6 auf einen definierten Wert. Der Rahmenzähler 8 wird femer mit jedem Taktimpuls des Datentakts DTa um eins weiter geschaltet. Aus dem Zählerstand lässt sich daher bestimmen, welche Position das am Datenausgang 3 anliegende Bit im jeweiligen STM-1-Rahmen einnimmt (bei Byte-paralleler Übertragung werden vom Rahmenzähler die Felder bzw. Bytes gezählt). . Da der Beginn des STM-1-Rahmens bekannt ist, kann dieser auch in dessen Felder zerlegt und verarbeitet werden. Weiterhin kann bestimmt werden, ob Bits aus dem Abschnittskopf (SOH) oder aus den virtuellen Containern VC-n anliegen. Der Rahmenzähler 8 gibt über den Ausgang 9 einen Verwaltungszeiger-Empfangstakt an die Verwaltungszeiger-Empfangseinrichtung 12, über den Ausgang 10 einen Abschnittskopf-Empfangstakt an die Abschnlttskopf-Empfangseinrichtung 7 und über den Ausgang 11 einen Schreibtakt STa an das erste Steuermodul 50 ab, durch den die im synchronen Transportmodul STM-1 enthaltene Nutzlast (Zeilen 1 - 9, Spalten 10 - 261) in das Steuermodul 50 eingelesen und dort weiterverarbeitet wird.

Das Auslesen der Bits des Abschnittskopfs (SOH bzw. RSOH und MSOH) steuert der Abschnittskopf-Empfangstakt, der vom Rahmenzähler 8 über den Ausgang 10 an die Abschnittskopf-Empfangseinrichtung 7 abgegeben wird. In der Abschnittskopf-Empfangseinrichtung 7 werden die Bits zwischengespeichert und nach Übertragung an das Steuermodul 50 vorzugsweise gemäss den in [1] angegebenen Vorschriften weiterverarbeitet. Das Auslesen der Bits des Verwaltungseinheitszeigers AU-4 steuert der Verwaltungszeiger-Empfangstakt, der vom Rahmenzähler 8 über den Ausgang 10 an die Abschnittskopf-Empfangseinrichtung 7 abgegeben wird. Anhand des Verwaltungseinheitszeigers (PTR) ermittelt das Steuermodul 50, das einen Multiplexer 51 und eine mit einem Haltespeicher 53 verbundene Adressierlogik 52 enthält, den Beginn eines virtuellen Containers VC-4 innerhalb der Nutzlast (Payload) des synchronen Transportmoduls STM-1, wonach der virtuelle Container VC-4 z.B. entsprechend den Empfehlungen von [1] und [2] weiter in die zur Adaption und Durchschaltung vorgesehenen Transportrahmen TU-3 bzw. TU12, in die virtuellen Container VC-3 bzw. VC12 oder in die Container C-3 bzw. C-12 zerlegt wird.

Femer kann dem Steuermodul 50 wenigstens ein plesiochroner Datenstrom 90 zugeführt werden, der gegebenenfalls nach Verarbeitung in einer Schnittstelle für plesiochrone Signale ganz oder teilweise in wenigstens einen der Speicherbereiche 141, ..., 14n eingeschrieben und anschliessend, wie oben beschrieben. In die gehenden Datenströme umverteilt wird. Die erfindungsgemässe Lösung kann zur Verarbeitung von Daten verwendet werden, die von der Plesiochronen zur Synchronen Digitalen Hierarchie, von der Synchronen zur Plesiochronen Digitalen Hierarchie oder auf einer höheren oder tieferen Ebene innerhalb der Synchronen Digitalen Hierarchie verlaufen. Die Erfindung kann daher vorteilhaft für flexible Multiptexer, Add-/Drop-Multiplexer oder Cross-Connect-Systeme eingesetzt werden, wie sie in [6] auf Seiten 53 bis 55 beschrieben sind. Möglich ist daher auch der Einsatz in nicht synchronen Übertragungssystemen, bei denen lediglich plesiochrone Datenströme adaptiert und durchgeschaltet werden.

Dem Steuermodul 50 obliegt daher die Aufgabe, die zugeführten Transportrahmen TU-n, die virtuellen Container VC-n oder gegebenenfalls die darin enthaltenen Container C-n nach dem Zeitmultiplexverfahren in zugeordnete Bereiche 141, ..., 14n des Speichermoduls 14 einzuschreiben. Die Zuordnung der Speicherbereiche 141, ..., 14n, die als Datenpuffer für die einzelnen Datenkanäle dienen, erfolgt durch die Adressierlogik 52, die durch ein Steuersignal CTRL programmiert wird. Eine Änderung der Verkehrswege für die einzelnen Kanäle (Durchschattung im Koppelnetz, siehe Kapitel 2.3.1.1 von [7]) erfolgt durch eine Änderung der Zuordnung der Transportrahmen TU-n, der virtuellen Container VC-n oder gegebenenfalls der darin enthaltenen Container C-n zu den Speicherbereichen 141, ..., 14n. Auf diese Weise lassen sich die Kanäle der synchronen Module STM-1a und STM-1b nach Zeit und Raum beliebig mischen sowie beliebigen Eingängen des anschliessenden Netzwerkes der Plesiochronen Digitalen Hierarchie (PDH) zuordnen. Letzteres gilt natürlich auch für den Fall, dass nur ein Transportkanal für synchrone Module STM-n vorhanden ist. Selbstverständlich können auch nur einige Kanäle dem PDH-Netzwerk und die weiteren Kanäle einem oder mehreren synchronen Modulen STM-n zugeordnet werden (Add-/Drop-Multiplexer). Im Unterschied zu der in [4] gezeigten Schaltungsanordnung, die lediglich eine Adaption eines SDH-Datenstromes an einen bestimmten Systemtakt erlaubt, kann die gesamte Funktionalität eines Add-/Drop-Multiplexers durch die erfindungsgemässe Lösung wahrgenommen werden.

Das erste Steuermodul 50, dem die Positionen der anliegenden Bits innerhalb des in Verarbeitung stehenden STM-1 Moduls aufgrund des anliegenden Rahmentaktes RT und gegebenenfalls des Datentaktes DT sowie die Positionen der Transportrahmen TU, der virtuellen Container VC oder der Container C sowie die diesen zugeordneten Bereiche 141, ..., 14n des Speichermoduls 14 bekannt sind, ist daher in der Lage, die Transportrahmen TU bzw. Container VC, C im Zeitmultiplexbetrieb in die zugeordneten Speicherbereiche 141, ..., 14n einzufüllen, die als Datenpuffer für die zugeordneten Kanäle ausgelegt sind. Sofern keine Abweichungen der Frequenzen der "kommenden" und der "gehenden" Signale vorliegen, durchläuft ein Transportrahmen TU bzw. Container VC, C einen zugeordneten Speicherbereich 141; ...; 14n innerhalb der Anzahl Lesetakte, die der Zahl der Speichereinheiten des Speicherbereichs 141, ..., 14n enispricht. Anhand der von der Verwaltungszeiger-Empfangsvorrichtung 12 ermittelten Zeiger (PTR), der Durchlaufzeit durch einen zugeordneten Speicherbereich 141: ...; 14n und allfälliger Verschiebungen zur Adaption des "kommenden" Datenstromes an eine neue Taktfrequenz können die Werte des Verwaltungseinheitszeigers (Pointer) Zeiger für das wieder zu erstellende synchrone Modul STM-n berechnet werden.

Zur Überwachung des Füllstandes der einzelnen Speicherbereiche 141, ..., 14n ist vorzugsweise ein im Zeitmultiplexverfahren arbeitender Füllstandsmesser 15 vorgesehen (die Zeitmultiplexverfahren zur Vermeidung der Duplizierung von Hardware sind insbesondere in [4] beschrieben), der die entsprechenden Daten an ein zweites Steuermodul 60 abgibt, das eine Adressierlogik 62 und einen Multiplexer 61 aufweist. Da die Frequenzen der "kommenden" und der "gehenden" Signale im Regelfall nicht genau übereinstimmen, entsteht eine Differenz zwischen der Rate mit der die Speicherbereiche 141, ..., 14n gefüllt bzw. entleert werden, wodurch die Speicherbereiche 141, ..., 14n entweder vollständig entleert oder gefüllt werden. Zur Kompensation dieser Differenz sind die in Kapitel 8 von [2] unter dem Thema "Frequency justification" beschriebenen Massnahmen vorgesehen (für AU-n pointer in Kapitel 8.1.3, für TU-3 pointer In Kapitel 8.2.3 und für TU-2 pointer in Kapitel 8.3.3). Dabei wird der Zeigerstand eines gehenden "Signals" unter Berücksichtigung des Zeigerstandes des "kommenden" Signals und der vorgenommenen Korrektur berechnet, die wie folgt durchgeführt wird. Wird der Füllstand eines Speicherbereichs 141; ...; 14n zu tief, so unterbricht das im Multiplexbetrieb arbeitende Steuermodul 60 in einigen genau definierten Rahmenpositionen den Lesetakt LT, wodurch der Füllstand des betreffenden Speicherbereichs 141; ...; 14n ansteigt. Wird der Füllstand eines Speicherbereichs 141; ...; 14n zu hoch, so fügt das Steuermodul 60 in einigen genau definierten Rahmenpositionen zusätzliche Lesetakte LT ein, wodurch der Füllstand des betreffenden Speicherbereichs 141; ...; 14n abfällt. Um möglichst grosse Schwankungen auffangen zu können, wird der Füllstand vorzugsweise immer im Bereich von 50% gehalten.

Für die an die Pleslochrone Digitale Hierarchie (PDH) abzugebenden Datenströme PDH1, ..., PDHn, die aus den Containem C-n bestehen, erfolgt in Abhängigkeit des Füllstandes der Speicherbereiche 141, ..., 14n eine Anpassung der Frequenz, mit der diese Datenströme ausgelesen werden. Wird der Füllstand eines Speicherbereichs 141; ...; 14n zu tief, so reduziert das Steuermodul 60 die Taktfrequenz des betreffenden PDH-Datenstromes, der an einem der Ausgänge PDH-1, ..., PDH-n abgegeben wird, wodurch der Füllstand des betreffenden Speicherbereichs 141; ...; 14n ansteigt. Wird der Füllstand eines Speicherbereichs 141; ...; 14n zu hoch, so erhöht das Steuermodul 60 die Taktfrequenz des betreffenden PDH-Datenstromes, wodurch der Füllstand des betreffenden Speicherbereichs 141; ...; 14n abfällt.

Obwohl die beiden Steuermodule 50 und 60, der Haltespeicher 53 und der Füllstandsmesser 15 in Fig. 4 voneinander getrennt dargestellt sind, werden deren Funktionen vorzügsweise in einem einzigen Baustein, z.B. einem Prozessor, zusammengefasst, der das Einschreiben und das Auslesen der Daten der einzelnen Kanäle im Multiplexbetrieb steuert. Ferner können diese Funktionen durch einen softwaregesteuerten Prozess bzw. durch entsprechende Softwaremodule realisiert werden. In der Schaltungsanordnung von Fig. 4 werden die Abläufe in den Steuermodulen 50 und 60 hingegen über eine Datenverbindung 56 aufeinander abgestimmt. Anhand den mit dem Abschnittskopf SOHa; SOHb übermittelten Informationen, kann durch das erste Steuermodul 50 femer eine Protection-Funktion realisiert werden. Zusätzlich zur Multiplex Section Protection kann auch die Subnetwork Conneclion Protection realisiert werden (siehe [5], Seite 36). Sofern die synchronen Transportmodule STMa, STMb dieselben Nutzdaten übertragen, kann jeweils auf den qualitativ besseren Kanal umgeschaltet werden (siehe [5], Seite 34).

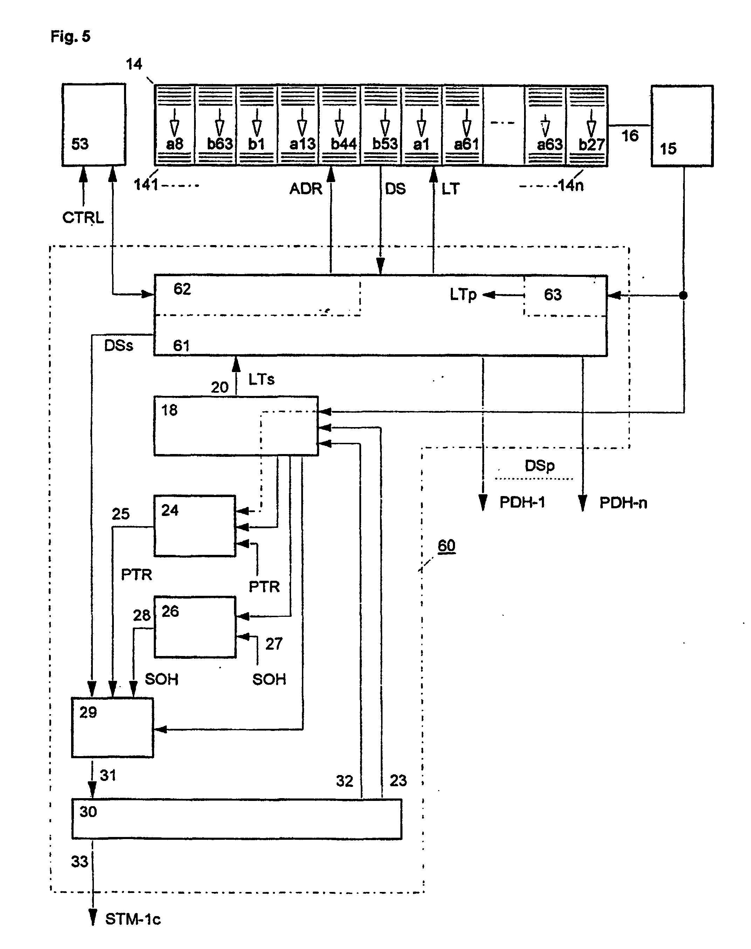

Fig. 5 zeigt die dem Speichermodul 14 nachgeschatteten Module, die zur Weiterverarbeitung der synchronisierten und gekoppelten Daten vorgesehen sind und die, z.B. wie In Fig. 4 gezeigt, integraler Bestandtell des zweiten Steuermoduls 60 sind, dessen Abläufe auf diejenigen des ersten Steuermoduls 50 abgestimmt sind. In Anlehnung an [3] wird die Funktion dieser Module kurz erläutert. Von den Ausgängen 23 und 32 einer SDH-Schnittstelle 30 wird ein zweiter Rahmenzähler 18 mit einem Datentakt DTc, d und einem Rahmentakt RTc, d versorgt. In einer Verwaltungseinheitzeiger-Sendeeinrichtung 24 werden, wie oben beschrieben, die neuen Verwaltungseinheitszeiger berechnet, die gesteuert vom zweiten Rahmenzähler 18 über einen Multiplexer 29 in den "gehenden" Datenstrom eingefügt werden. In einer Abschnittskopf-Sendeeinrichtung 26 werden von einer Schnittstelle ankommende Bits für die Abschnittsköpfe (SOH) aufbereitet, die gesteuert vom zweiten Rahmenzähler 18 über den Multiplexer 29 in den "gehenden" Datenstrom eingefügt und zur SDH-Schnittstelle 30 übertragen werden. Zum Auslesen der Daten aus dem Speichermodul 14 wird von einem Ausgang 20 des zweiten Rahmenzählers 18 ein Lesetakt LTs an das Steuermodul 60 abgegeben. In Abhängigkeit des Füllstandes der Speicherbereiche 141, ..., 14n sind im Lesetakt LTs an bestimmten Rahmenpositionen Takte zusätzlich enthalten oder entfernt. Zum Auslesen von Daten, die an die Plesiochrone Digitale Hierarchie (PDH) abgegeben werden, ist im zweiten Steuermodul 60 ein Taktgenerator 63 vorgesehen, der für jeden PDH-Kanal ein Taktsignal LTp erzeugt, welches in Abhängigkeit des Füllstandes des entsprechenden Speicherbereich 141; ...; 14n geändert wird. Der im zweiten Steuermodul 60 vorgesehene Multiplexer 61 ist daher dafür besorgt, dass die adressierten Speicherbereiche abwechslungsweise mit den vorgesehenen Lesetakten LTs, LTp ausgelesen werden.

Fig. 6 zeigt die aus Fig. 4 und Fig. 5 bekannte Schaltungsanordnung in einer vereinfachten Ausgestaltung. Darin ist ein mit einem Prozessor 80 sowie dem Speichermodul 14 verbundenes Steuermodul 70 gezeigt, das nur einen Multiplexer 71, nur eine mit einem Haltespeicher 53 verbundene Adressierlogik 72 sowie einen Füllstandsmesser 15 aufweist. Der Rahmenzähler 8 gibt den Verwaltungszeiger-Empfangstakt, den Abschnittskopf-Empfangstakt und den Schreibtakt zur Eingabe der Nutzdaten (Payload) über den Ausgang 9, 10 bzw. 11 direkt an das Steuermodul 70 ab, so dass der Abschnittskopf, der Verwaltungszeiger und die Nutzdaten direkt in das Steuermodul 70 eingelesen und dort mit Hilfe des Prozessors 80 in der oben beschriebenen Weise verarbeitet werden können. Das Einlesen der Daten kann ferner durch den Datentakt DTa erfolgen (punktierte Linie), wonach durch die an Ausgängen 9, 10 bzw. 11 des Rahmenzählers 8 abgegebenen Signale zwischen den Datenbits des Verwaltungszeigers, des Abschnittkopfs und des Nutzfeides unterschieden werden kann. Dabei wird zum Einschreiben und Auslesen der Daten in die bzw. aus den Speicherbereichen 141; ...; 14n nur ein Multiplexer 71 und nur eine Adressierlogik 72 verwendet, die vom Prozessor 80 gesteuert werden. Fig. 6 macht deutlich, dass zur Realisierung der erfindungsgemässen Lösung verschiedenartige Ausgestaltungen denkbar sind., Z.B. könnten die notwendigen Funktionen wie bereits erwähnt durch einen softwaregesteuerten Prozess bzw. durch entsprechende Softwaremodule realisiert werden.

Die erfindungsgemässe Adaption und Durchschaltung der Datenkanäle kann in einem Übertragungssystem der plesiochronen oder synchronen Digitalhierarchie erfolgen. Die erfindungsgemässe Vorrichtung kann ferner als Add-/Drop-Multiplexer verwendet werden, der zur Adaption und Durchschaltung von kommenden und gehenden Kanälen eines weiteren plesiochronen oder synchronen Übertragungssystems dient.

Literaturverzeichnis :
[1] ITU-T Recommendation G.783 (Fassung 01/94)
[2] ITU-T Recommendation G.707 (Fassung 03/96, ersetzt die früheren Recommendations G.707, G.708 und G. 709)
[3] DE-PS 40 18 687 C2
[4] WO 93/25029
[5] M. Sexton, A. Reid, Transmission Networking-SONET and the Synchronous Digital Hierarchy, Artech House 1992
[6] G. Siegmund, ATM-Die Technik des Breitband-ISDN, v. Decker's Verlag, Heidelberg 1994,2. Auflage
[7] G. Altehage, Digitale Vermittlungssysteme für Fernsprechen und ISDN, R.v. Decker's Verlag, Heidelberg 1991

## Patentansprüche

1. Verfahren zur Adaption und Durchschaltung bzw. Kopplung von Datenkanälen, die innerhalb eines ersten digitalen Übertragungssystems (SDH; PDH) gegebenenfalls mittels Transportmodulen in darin enthaltenen Transporteinhelten übertragen werden, wobei Daten von "kommenden" Kanälen im Multiplexbetrieb in Speicherbereiche eines Speichermoduls eingeschrieben und unter Adaption an die Frequenz bzw. unter Adaption der Frequenz eines "gehenden" Kanals wieder ausgelesen werden, **dadurch gekennzeichnet, dass** das Einschreiben der Daten der "kommenden" Kanäle und das Auslesen der Daten der "gehenden" Kanäle In die bzw. aus den Speicherbereichen (141, ..., 14n) des Speichermoduls (14) entsprechend den gewählten Verkehrswegen derart gesteuert wird, dass ein "kommenden" Datenkanal gleichzeitig mit der Adaption in einen zugeordneten "gehenden" Datenkanal überführt wird.

2. Verfahren nach Anspruch 1, **dadurch gekennzeichnet, dass** wenigstens einer der "kommenden" Kanäle (PDH-1, ..., PDH-n; STM-1a) aus einem zweiten digitalen Übertragungssystem (PDH; SDH) zugeführt und/oder dass wenigstens einer der "gehenden" Kanäle (PDH-1, ..., PDH-n; STM-1a) an das zweite digitale Übertragungssystem (PDH; SDH) abgegeben wird.

3. Verfahren nach Anspruch 1 oder 2, **dadurch gekennzeichnet, dass** die Daten im ersten Übertragungssystem (SDH) synchron mittels Transportmodulen (STM-1a) in darin enthaltenen Transporteinheiten (C; VC und TU) übertragen werden, dass die in synchronen oder plesiochronen Datenströmen übertragenen Daten der "kommenden" Kanäle im Multiplexbetrieb in die Speicherbereiche (141, ..., 14n) des Speichermoduls (14) eingeschrieben, entsprechend den gewählten Verkehrswegen ausgelesen sowie in "gehende" Transportmodule (STM-1c) und/oder in "gehende" plesiochrone Datenkanäle (PDH-1) des zweiten digitalen Übertragungssystems (PDH) eingefügt werden oder dass die Daten des ersten Übertragungssystems (PSH) in plesiochronen Datenströmen übertragen werden, wobei die in synchronen oder plesiochronen Datenströmen übertragenen Daten der "kommenden" Kanäle im Multiplexbetrieb in die Speicherbereiche (141, ..., 14n) des Speichermoduls (14) eingeschrieben, entsprechend den gewählten Verkehrswegen ausgelesen sowie in "gehende" plesiochrone Datenkanäle (PDH-1) und/oder in "gehende" Transportmodule (STM-1c) des zweiten digitalen Übertragungssystems (SDH) eingefügt werden.

4. Verfahren nach Anspruch 1, 2 oder 3, **dadurch gekennzeichnet, dass** die Frequenz des "gehenden" plesiochronen Datenkanals entsprechend dem Füllstand des zugeordneten Speicherbereiches (141; ...; 14n) gesteuert wird.

5. Verfahren nach Anspruch 2, **dadurch gekennzeichnet, dass** die Transportmodule (STM-1a) durch Verarbeitung von Abschnittskopf-, Zeiger- und Pfadrahmenkopfinformationen bis auf die gewünschte Hierarchieebene hinab zerlegt und nach der Durchschaltung und allenfalls vorgenommener Korrektur der Zeigerinformationen wieder zu "gehenden" Transportmodulen (STM-1c) zusammengefügt werden.

6. Verfahren nach Anspruch 5, **dadurch gekennzeichnet, dass** der Füllstand der Speicherbereiche (141; ...; 14n) durch entsprechendes Auslesen der Daten und Anpassung der Zeigerinformation zwischen zwei vorgegebenen Grenzwerten, vorzugsweise in der Mitte zwischen den Endwerten gehalten wind.

7. Schaltungsanordnung zur Adaption und Durchschaltung bzw. Kopplung von Datenkanälen, die innerhalb eines Netzwerks eines digitalen Übertragungssystems gegebenenfalls mittels Transportmodulen in darin enthaltenen Transporteinheiten übertragen werden, wobei ein Speichermodul (14) mit Speicherbereichen (141, ..., 14n) vorgesehen ist, in die die Daten von "kommenden" Kanälen im Multiplexbetrieb einschreibbar und unter Adaption an die Frequenz eines "gehenden" Kanals wieder auslesbar sind, **dadurch gekennzeichnet, dass** wenigstens eine mit einem Haltespeicher (53) verbundene Adressierlogik (72) vorgesehen ist, durch die entsprechend den im Haltespeicher (53) festgelegten Zuordnungen der "kommenden" zu den "gehenden" Kanälen beim Schreiben und Lesen jeweils die Speicherbereiche (141; ...; 14n) entsprechend den gewählten Verkehrswegen so adressierbar sind, dass ein "kommender" Datenkanal gleichzeitig mit der Adaption in einen zugeordneten "gehenden" Datenkanal überführbar ist.

8. Schaltungsanordnung nach Anspruch 7, **dadurch gekennzeichnet, dass** ein Multiplexer (71), dem die "kommenden" Daten zuführbar und die "gehenden" Daten entnehmbar sind, zur Steuerung des Halte-Speichers (53) vorgesehen ist, durch den mittels der Adressierlogik (72) die Speicherbereiche (141, ..., 14n) des Speichermoduls (14) adressierbar sind, in die die zugeführten Daten vom Multiplexer (71) eingeschrieben und wieder ausgelesen werden, wodurch eine Kopplung der einander zugeordneten "kommenden" und "gehenden" Datenkanäle erfolgt.

9. Schaltungsanordnung nach Anspruch 7 oder 8 zur Adaption und Durchschaltung von Datenkanälen, die innerhalb oder an der Peripherie eines Netzwerks eines synchronen digitalen Übertragungssystems mittels Transportmodulen (STM-1a) in darin enthaltenen Transporteinheiten (C; VC und TU) übertragen werden, **dadurch gekennzeichnet, dass** die in Transporteinheiten (C; VC und TU) einer bestimmten Hierarchieebene verpackten Daten der "kommenden" Kanäle im Multiplexbetrieb in die Speicherbereiche (141, ..., 14n) des Speichermoduls (14) einschreibbar sind, aus denen sie auslesbar und in "gehende" Transportmodule (STM-1c) oder in wenigstens einen "gehenden" plesiochronen Datenkanal (PDH-1) einfügbar sind.

10. Schaltungsanordnung nach Anspruch 7 oder 8 zur Adaption und Durchschaltung von Datenkanälen, die innerhalb oder an der Peripherie eines Netzwerks eines plesiochronen digitalen Übertragungssystems in plesiochronen Datenströmen übertragen werden, **dadurch gekennzeichnet, dass** die in plesiochronen Datenströmen übertragenen Daten der "kommenden" Kanäle im Multiplexbetrieb in die Speicherbereiche (141, ..., 14n) des Speichermoduls (14) einschreibbar sind, aus denen sie auslesbar sind und in Transporteinheiten (C; VC und TU) einer bestimmten Hierarchieebene "gebenden" Transportmodule (STM-1c) oder in wenigstens einen "gehenden" plesiochronen Datenkanal (PDH-1) einfügbar sind.

11. Schaltungsanordnung nach Anspruch 7, 8, 9 oder 10, **dadurch gekennzeichnet, dass** ein Füllstandsmesser (15) vorgesehen ist, der den Füllstand jedes Speicherbereiches (141; ...; 14n) überwacht und an den Multiplexer (71) meldet, welcher den Füllstand durch Änderungen des Lesetaktes zwischen zwei Grenzwerten hält.

## Claims

1. Method for adapting and cross-connecting or switching data channels which are transferred within a first digital transmission system (SDH; PDH), if applicable by means of transport modules in transport units contained therein, with data from "incoming" channels being written in multiplex mode into memory areas of a memory module and being read out again with adaptation to the frequency or adaptation of the frequency of an "outgoing" channel, **characterised in that** the writing in of the data of the "incoming" channels and the reading out of the data of the "outgoing" channels into or out of the memory areas (141, ..., 14n) of the memory module (14) is controlled according to the traffic routes selected in such a way that an "incoming" data channel is transferred at the same time as the adaptation into an assigned "outgoing" data channel.

2. Method according to Claim 1, **characterised in that** at least one of the "incoming" channels (PDH-1, ..., PDH-n; STM-1a) is supplied from a second digital transmission system (PDH; SDH) and/or that at least one of the "outgoing" channels (PDH-1, ..., PDH-n; STM-1a) is supplied to the second digital transmission system (PDH; SDH).

3. Method according to Claim 1 or 2, **characterised in that** the data in the first transmission system (SDH) is transferred synchronously by means of transport modules (STM-1a) in transport units (C; VC and TU) contained therein, that the data transferred in synchronous or plesiochronous data streams of the "incoming" channels is written in multiplex mode into the memory areas (141, ..., 14n) of the memory module (14), read out according to the traffic routes selected and inserted into "outgoing" transport modules (STM-1c) and/or into "outgoing" plesiochronous data channels (PDH-1) of the second digital transmission system (PDH) or that the data from the first transmission system (PSH) is transferred in plesiochronous data streams, with the data streams transferred in synchronous or plesiochronous data streams of the "incoming" channels being written in multiplex mode into the memory areas (141, ..., 14n) of the memory module (14), read out according to the traffic routes selected and inserted into "outgoing" plesiochronous data channels (PDH-1) and/or into "outgoing" transport modules (STM-1c) of the second digital transmission system (SDH).

4. Method according to Claim 1, 2 or 3, **characterised in that** the frequency of the "outgoing" plesiochronous data channel is controlled according to the fill level of the assigned memory area (141; ...; 14n).

5. Method according to Claim 2, **characterised in that** the transport modules (STM-1a) are disassembled down to the required hierarchical level by processing section overhead, pointer and path overhead information and combined again into "outgoing" transport modules (STM-1c) after the cross-connection of and any correction to the pointer information.

6. Method according to Claim 5, **characterised in that** the fill level of the memory areas (141; ...; 14n) is maintained between two predefined limit values, preferably in the middle between the end values, by appropriate reading out of the data and adjustment of the pointer information.

7. Circuit arrangement for adapting and cross-connecting or switching data channels which are transferred within a network of a digital transmission system, if applicable by means of transport modules in transport units contained therein, with a memory module (14) containing memory areas (141, ..., 14n) being provided, into which the data from "incoming" channels can be written in multiplex mode and then read out again with adaptation to the frequency of an "outgoing" channel, **characterised in that** at least one addressing logic (72) connected to a control memory (53) is provided, by means of which the memory areas (141; ...; 14n) can be addressed in each instance according to the traffic routes selected on the basis of assignments of "incoming" to "outgoing" channels specified in the control memory (53) during writing and reading, such that an "incoming" data channel can be transferred at the same time as adaptation into an assigned "outgoing" data channel.

8. Circuit arrangement according to Claim 7, **characterised in that** a multiplexer (71), to which the "incoming" data can be supplied and from which the "outgoing" data can be removed, is provided to control the control memory (53), by means of which the memory areas (141, ..., 14n) of the memory module (14) can be addressed using the addressing logic (72), into which the data supplied is written and read out again by the multiplexer (71), with the result that there is a switching of the "incoming" and "outgoing" data channels assigned to each other.

9. Circuit arrangement according to Claim 7 or 8 for adapting and cross-connecting data channels which are transferred within or at the periphery of a network of a synchronous digital transmission system by means of transport modules (STM-1a) in transport units (C; VC and TU) contained therein, **characterised in that** the data of the "incoming" channels packed into transport units (C; VC and TU) of a specific hierarchical level can be written in multiplex mode into the memory areas (141, ..., 14n) of the memory module (14), from which they can be read out and inserted into "outgoing" transport modules (STM-1c) or into at least one "outgoing" plesiochronous data channel (PDH-1).

10. Circuit arrangement according to Claim 7 or 8 for adapting and cross-connecting data channels which are transferred within or at the periphery of a network of a plesiochronous digital transmission system in plesiochronous data streams, **characterised in that** the data of the "incoming" channels transferred in plesiochronous data streams can be written in multiplex mode into the memory areas (141, ..., 14n) of the memory module (14), from which they can be read out and inserted into transport units (C; VC and TU) of a specific hierarchical level of "outgoing" transport modules (STM-1c) or into at least one "outgoing" plesiochronous data channel (PDH-1).

11. Circuit arrangement according to Claim 7, 8, 9 or 10, **characterised in that** a fill level indicator (15) is provided which monitors the fill level of each memory area (141;...; 14n) and reports to the multiplexer (71), which maintains the fill level between two limit values by adjusting the read clock.

## Revendications

1. Procédé d'adaptation et d'interconnexion ou de couplage de canaux de données qui sont trarismis à l'intérieur d'un premier système de transmission numérique (SDH ; PDH) le cas échéant au moyen de modules de transport contenant des unités de transport, les données de canaux « arrivants » étant écrites dans le multiplexage dans des zones de mémorisation d'un module de mémorisation et étant de nouveau lues par adaptation à la fréquence ou adaptation de la fréquence d'un canal « partant », **caractérisé en ce que** l'écriture des données des canaux « arrivants » et la lecture des données des canaux «partants » dans les zones de mémorisation (141, ..., 14n) du module de mémorisation (14) sont commandées en fonction des voies de communication choisies, et **en ce qu'**un canal de données « arrivant » est transformé simultanément à l'adaptation en un canal de données « partant » associé.

2. Procédé selon la revendication 1, **caractérisé en ce que** au moins un des canaux « arrivants » (PDH-1, ..., PDH-n; STM-1a) est amené depuis un deuxième système de transmission numérique (PDH ; SDH) et/ou au moins un des canaux « partants » (PDH-1, ..., PDH-n; STM-1a) est retourné au deuxième système de transmission numérique (PDH ; SDH).

3. Procédé selon la revendication 1 ou 2, **caractérisé en ce que** les données dans le premier système de transmission (SDH) sont transmises de façon synchrone au moyen de modules de transport (STM-1a) contenant des unités de transport (C ; VC et TU), **en ce que** les données des canaux « arrivants », transmises en flux de données synchrones ou plésiochrones, sont écrites dans le multiplexage dans les zones de mémorisation (141, ..., 14n) du module de mémorisation (14), sont lues en fonction des voies de communication choisies et sont insérées dans des modules de transport «partants» (STM-1c) et/ou dans des canaux de données plésiochrones «partants» (PDH-1) du deuxième système de transmission numérique (PDH) ou **en ce que** les données du premier système de transmission (PSH) sont transmises en flux de données plésiochrories, les données des canaux « arrivants », transmises en flux de données synchrones ou plésiochrones, sont écrites dans le multiplexage dans les zones de mémorisation (141, ..., 14n) du module de mémorisation (14), sont lues en fonction des voies de communication choisies et sont insérées dans des canaux de données plésiochrones «partants» (PDH-1) et/ou dans des modules de transport « partants » (STM-1c) du deuxième système de transmission numérique (SDH).

4. Procédé selon la revendication 1, 2 ou 3, **caractérisé en ce que** la fréquence du canal de données plésiochrones «partant» est commandée en fonction de l'état de remplissage de la zone de mémorisation associée (141 ; ... ; 14n).

5. Procédé selon la revendication 2, **caractérisé en ce que** les modules de transport (STM-1a) sont fractionnés jusqu'au plan hiérarchique souhaité par traitement d'informations de tête de section, d'index de tête de trame de circuit et, après l'interconnexion et éventuellement après avoir effectué une correction des informations d'index, sont rassemblés de nouveau en modules de transport « partants » (STM-1c).

6. Procédé selon la revendication 5, **caractérisé en ce que** l'état de remplissage des zones de mémorisation (141 ; ... ; 14n) est maintenu entre deux valeurs limites prédéterminées, de préférence au milieu entre les valeurs d'extrémité, par une lecture correspondante des données et une adaptation de l'information d'index.

7. Dispositif de commutation pour l'adaptation et l'interconnexion ou le couplage de canaux de données qui sont transmis à l'intérieur d'un réseau d'un système de transmission numérique le cas échéant au moyen de modules de transport contenant des unités de transport, dans lequel il est prévu un module de mémorisation (14) comportant des zones de mémorisation (141, ..., 14n) dans lesquelles les données provenant de canaux « arrivants » peuvent être écrites dans le multiplexage et être de nouveau lues par une adaptation à la fréquence d'un canal «partant», **caractérisé en ce qu'**il est prévu au moins une logique d'adressage (72), reliée à une mémoire de maintien (53), permettant d'adresser en fonction des associations, fixées dans la mémoire de maintien (53), des canaux « arrivants » aux canaux « partants » lors de l'écriture et de la lecture à chacune des zones de mémorisation (141, ... ; 14n) en fonction des voies de communication choisies de sorte qu'un canal « arrivant » peut être transformé simultanément à l'adaptation en un canal de données « partant » associé.

8. Dispositif de commutation selon la revendication 7, **caractérisé en ce qu'**il est prévu un multiplexeur (71) auquel les données « arrivantes» peuvent être amenées et d'où les données « partantes » peuvent être retirées, en vue de commander la mémoire de maintien (53), permettant d'adresser au moyen de la logique d'adressage (72) les zones de mémorisation (141, ..., 14n) du module de mémorisation (14) dans lesquelles les données amenées par le multiplexeur (71) sont écrites et de nouveau lues de façon à effectuer un couplage des canaux de données «arrivants» et « partants » associés.

9. Dispositif de commutation selon la revendication 7 ou 8 pour l'adaptation et l'interconnexion de canaux de données qui sont transmis à l'intérieur ou à la périphérie d'un réseau d'un système de transmission numérique synchrone au moyen de modules de transport (STM-1a) contenant des unités de transport (C ; VC et TU), **caractérisé en ce que** les unités de transport (C ; VC et TU) d'un plan hiérarchique déterminé de données empaquetées des canaux « arrivants » peuvent être écrites dans le multiplexage dans les zones de mémorisation (141, ..., 14n) du module de mémorisation (14) où elles peuvent être lues, et peuvent être insérées dans des modules de transport « partants » (STM-1c) ou dans au moins un canal de données plésiochrones « partants» (PDH-1).

10. Dispositif de commutation selon la revendication 7 ou 8 pour l'adaptation et l'interconnexion de canaux de données qui sont transmis à l'intérieur ou à la périphérie d'un réseau d'un système de transmission numérique plésiochrone en flux de données plésiochrones, **caractérisé en ce que** les données des canaux « arrivants », transmises en flux de données plésiochrones, peuvent être écrites dans le multiplexage dans les zones de mémorisation(141, ..., 14n) du module de mémorisation (14), où elles peuvent être lues, et peuvent être insérées dans des unités de transport (C ; VC et TU) d'un plan hiérarchique déterminé de modules de transport « partants » (STM-1c) ou dans au moins un canal de données plésiochrones « partants » (PDH-1).

11. Dispositif de commutation selon la revendication 7, 8, 9 ou 10, **caractérisé en ce qu'**il est prévu un dispositif de mesure d'état de remplissage (15) qui surveille l'état de remplissage de chaque zone de mémorisation (141 ; ... ; 14n) et indique au multiplexeur (71) celle dont l'état de remplissage se trouve entre deux valeurs limites en modifiant le signal d'horloge de lecture.
